# EUROPÄISCHE PATENTSCHRIFT

(11) **EP 2 513 612 B1**
(45) Veröffentlichungstag und Bekanntmachung des Hinweises auf die Patenterteilung: **04.03.2015**
(21) Anmeldenummer: 09805695.5
(22) Anmeldetag: 14.12.2009
(51) Int. Cl.: G01F 1/74, G01F 1/84

(54) **VERFAHREN ZUM BETREIBEN EINES CORIOLIS-MASSENDURCHFLUSSMESSGERÄTS SOWIE CORIOLIS-MASSENDURCHFLUSSMESSGERÄT**
METHOD FOR OPERATING A CORIOLIS MASS FLOW RATE METER AND CORIOLIS MASS FLOW RATE METER
PROCÉDÉ POUR FAIRE FONCTIONNER UN DÉBITMÈTRE MASSIQUE CORIOLIS AINSI QUE DÉBITMÈTRE MASSIQUE CORIOLIS

(43) Veröffentlichungstag der Anmeldung: 24.10.2012
(73) Patentinhaber: Siemens Aktiengesellschaft, 80333 München (DE)
(72) Erfinder: BIERWEILER, Thomas, 76297 Stutensee (DE); ENS, Wolfgang, 76351 Linkenheim (DE); HAMMACHER, Felix, 66953 Pirmasens (DE); LENZ, Henning, 76135 Karlsruhe (DE)
(86) Internationale Anmeldenummer: PCT/EP2009/067051
(87) Internationale Veröffentlichungsnummer: WO 2011/072711

(56) Entgegenhaltungen:
- EP-A2- 0 816 807
- EP-A2- 1 845 346
- WO-A1-00/19175
- WO-A1-2009/051588

## Beschreibung

Die Erfindung betrifft ein Verfahren zum Betreiben eines Coriolis-Massendurchflussmessgeräts nach dem Oberbegriff des Anspruchs 1 sowie ein Coriolis-Massendurchflussmessgerät nach dem Oberbegriff des Anspruchs 7.

In der Prozessautomatisierung ist es vielfach erforderlich, die Fließgeschwindigkeit eines Mediums durch eine Rohrleitung zu messen. Dazu sind beispielsweise magnetisch-induktive, Ultraschall- oder Schwebekörper-Durchflussmessgeräte bekannt, ebenso Wirbelstromzähler oder Differenzdruckmessumformer, die mit einer Druckblende im Messrohr zusammenarbeiten. Diese Messgeräte liefern unmittelbar einen Messwert für die Strömungsgeschwindigkeit oder unter Berücksichtigung der Messrohrgeometrie für das Durchflussvolumen. Lediglich Coriolis-Massendurchflussmessgeräte erlauben eine direkte Messung des Massendurchflusses.

Coriolis-Massendurchflussmessgeräte weisen im Allgemeinen ein einziges Messrohr oder eine Anzahl, zum Beispiel ein Paar, von Messrohren auf, durch das bzw. die ein Medium strömt, dessen Massendurchfluss bestimmt werden soll. Dabei sind unterschiedliche Anordnungen und Geometrien der Messrohre bekannt. Es gibt zum Beispiel Coriolis-Massendurchflussmessgeräte mit einem einzigen geraden Messrohr sowie Coriolis-Massendurchflussmessgeräte mit zwei gekrümmten, parallel zueinander verlaufenden Messrohren. Letztere, paarweise identisch ausgeführte Messrohre, werden durch eine im mittleren Bereich platzierte Erregeranordnung zur Erzielung eines Massenausgleichs so zum Schwingen angeregt, dass sie gegeneinander schwingen, das heißt, dass die Schwingungen der beiden Messrohre um 180° gegeneinander phasenversetzt sind. Die Lage des Massenmittelpunkts des aus den beiden Messrohren gebildeten Systems bleibt dabei im Wesentlichen konstant und auftretende Kräfte werden weitgehend kompensiert. Das hat als positive Konsequenz, dass das schwingende System kaum nach außen als solches wirksam wird. Vor und hinter der Erregeranordnung werden Schwingungsaufnehmer angebracht, zwischen deren Ausgangssignalen bei einer Strömung eine Phasendifferenz als Messsignal ausgewertet werden kann. Diese wird durch die bei einer Strömung herrschenden Corioliskräfte und damit durch den Massendurchfluss verursacht. Die Dichte des Mediums beeinflusst die Resonanzfrequenz des Schwingungssystems. Damit kann neben dem Massendurchfluss unter anderem auch die Dichte des strömenden Mediums bestimmt werden.

Aus der WO 2009/089839 A1 ist ein Coriolis-Massendurchflussmessgerät bekannt, mit welchem der unerwünschte Zustand einer Mehrphasenströmung deutlicher erkannt und somit ein zuverlässigerer Betrieb des Geräts ermöglicht werden kann. Informationen über Mehrphasenströmungen, wie Zweiphasenströmungen, insbesondere die Erkennung des Auftretens einer solchen Mehrphasenströmung sowie Aussagen über die Ausprägung der Mehrphasenströmungen, sind damit gewinnbar. Ein Beispiel für eine Zweiphasenströmung sind Gasblasen in einer Flüssigkeit, die zum Beispiel verursacht sein können durch Kavitation in Ventilen oder Pumpen oder das Ansaugen von Luft an Undichtigkeiten eines Rohrleitungssystems. Ferner ist ein Beispiel für eine Zweiphasenströmung ein Gemisch aus Feststoffen in einer Flüssigkeit, zum Beispiel verursacht durch Kristallisation oder dem plötzlichen Ablösen von Ablagerungen im Rohrleitungssystem, durch das das Medium strömt. Ein weiteres Beispiel sind Gemische nicht lösbarer Flüssigkeiten, also Emulsionen, die zum Beispiel durch einen Wechsel des durch das Rohrleitungssystem strömenden Mediums verursacht sein können.

Aus der DE 10 2006 017 676 B3 ist ein Verfahren zum Betrieb eines Coriolis-Massendurchflussmessgeräts bekannt, bei welchem mehrere Indikatorgrößen zur Detektion einer Mehrphasenströmung ermittelt werden. Beispielsweise wird zur Bestimmung einer Indikatorgröße, die auf Reibungsverlusten innerhalb der Zweiphasenströmung basiert, die zur Schwingungsanregung des Messrohrs erforderliche Antriebsleistung durch den Effektivwert eines Schwingungssignals dividiert. Zur Bestimmung einer anderen Indikatorgröße wird ein Frequenzspektrum der von den Schwingungsaufnehmern erfassten Signale analysiert. Abweichungen eines im Betrieb des Coriolis-Massendurchflussmessgeräts ermittelten Spektrums von einem zuvor festgelegten, nominellen Spektrum werden zur Berechnung der weiteren Indikatorgröße zur Detektion einer Mehrphasenströmung genutzt.

In vielen Anwendungen der Prozessautomatisierung werden Medien gefördert, die mit der Zeit Ablagerungen oder Anhaftungen an den Innenseiten der Rohrleitungen und ebenso im Inneren des Durchflussmessgeräts bilden. Mit zunehmenden Ablagerungen verschlechtert sich die Messgenauigkeit des Coriolis-Massendurchflussmessgeräts. Führen die Ablagerungen sogar zu einer teilweisen Verstopfung des Messrohrs, muss der zur Aufrechterhaltung der gewünschten Strömungsgeschwindigkeit erforderliche Druck in den Rohrleitungen sowie im Messgerät erhöht werden. Dieser Effekt ist insbesondere kritisch im Bereich der Lebensmittel- und Getränkeindustrie, da ein über die Maßen erhöhter Druck die Qualität der hergestellten Produkte negativ beeinflussen kann.

Aus der WO 00/19175 A1 ist ein Verfahren zum Betreiben eines Coriolis-Massendurchflussmessgeräts mit wenigstens einem von einem Medium durchströmten Messrohr, das zu Schwingungen angeregt wird, und mit wenigstens zwei in Längsrichtung des Messrohrs voneinander beabstandeten Schwingungsaufnehmern zur Erzeugung eines ersten Schwingungssignals bzw. eines zweiten Schwingungssignals bekannt. Zur Diagnose des Massendurchflussmessgeräts werden verschiedene Indikatorgrößen ausgewertet, u. a. die Antriebsverstärkung als eine Indikatorgröße, die auf der Dämpfung der Schwingungen des Messrohrs beruht. Das Verfahren kann auch zur Detektion von Ablagerungen im Messrohr angewandt werden.

Die EP 0 816 807 A2 offenbart ein Verfahren zum Betreiben eines Coriolis-Massendurchflussmessgeräts, wobei verschiedene Indikatorgrößen zur Feststellung von Korrosion, Erosion, Ermüdung des Messrohrs sowie von Ablagerungen im Messrohr bestimmt werden. Eine der Indikatorgrößen beruht auf der Dämpfung der Schwingungen des Messrohrs, eine andere auf der Ausprägung zumindest einer Oberschwingung im Frequenzspektrum des Schwingungssignals. Bei der Auswertung werden verschiedene Kombinationen von Indikatorgrößen berücksichtigt.

Der Erfindung liegt die Aufgabe zugrunde, ein Verfahren zum Betreiben eines Coriolis-Massendurchflussmessgeräts sowie ein neues Coriolis-Massendurchflussmessgerät zu schaffen, mit welchen der unerwünschte Zustand von Ablagerungen im Messrohr zuverlässig erkannt werden kann und die somit einen zuverlässigeren Betrieb des Geräts ermöglichen.

Zur Lösung dieser Aufgabe weist das neue Verfahren zum Betreiben eines Coriolis-Massendurchflussmessgeräts der eingangs genannten Art die im kennzeichnenden Teil des Anspruchs 1 angegebenen Merkmale auf. In den abhängigen Ansprüchen sind vorteilhafte Weiterbildungen, in Anspruch 7 ein neues Coriolis-Massendurchflussmessgerät beschrieben.

Die Erfindung beruht auf der Erkenntnis, dass Ablagerungen im Messrohr die Dämpfung des Schwingungssystems erhöhen. Dieser Effekt ist jedoch ähnlich der bekannten Erhöhung der Reibungsverluste innerhalb von Zweiphasenströmungen. Über das Verhältnis zwischen dem quadratischen Mittelwert beispielsweise des ersten Schwingungssignals und der Antriebsleistung kann eine erste Indikatorgröße erhalten werden, die als proportional zur Dämpfung angesehen werden kann. Weiterhin sind Ablagerungen im Allgemeinen nicht ideal homogen an der Rohrinnenwand verteilt. Durch die ungleichmäßige Massenverteilung in den Rohren entstehen Oberschwingungen, deren Ausprägung durch eine Spektralanalyse der Schwingungssignale ausgewertet werden kann. Anhand einer Auswertung im Frequenzbereich ist daher feststellbar, ob Ablagerungen die Ursache für eine festgestellte Erhöhung der Dämpfung bilden.

Die Erfindung hat somit den Vorteil, dass durch sie eine zuverlässige Aussage über das Vorhandensein von Ablagerungen im Messrohr des Coriolis-Massendurchflussmessgeräts ermöglicht wird. Damit ist ein so genanntes Condition Monitoring, das heißt eine Zustandsüberwachung, sowohl des Feldgeräts als auch der prozesstechnischen Anlage, in welcher das Coriolis-Massendurchflussmessgerät als Feldgerät eingesetzt ist, möglich. Neben der Erkennung eines möglichen Messfehlers liefert dies dem Betreiber der Anlage wertvolle Hinweise über den Zustand seiner Anlage.

Ein weiterer Vorteil ist darin zu sehen, dass die Diagnose auf Signalen beruht, die in der Auswerteelektronik eines herkömmlichen Coriolis-Massendurchflussmessgeräts bereits vorliegen. Es werden also zur Ermittelung der Indikatorgrößen lediglich ohnehin im Massendurchflussmessgerät vorhandene Signale verwendet. Das Gerät muss daher in vorteilhafter Weise nicht durch eine zusätzliche Hardware oder eine zusätzliche Sensorik oder Aktorik erweitert werden. Dadurch ist der zur Realisierung der Erfindung erforderliche Aufwand vergleichsweise gering. Lediglich die Software der Auswerteeinrichtung eines herkömmlichen Geräts muss um die zusätzlichen Algorithmen zur Erkennung von Ablagerungen erweitert werden. Diese können jedoch einfach gehalten werden und benötigen nur einen geringen Teil der vorhandenen Rechenleistung. Vorteilhaft sind zudem keine Eingriffe in einen Regelkreis notwendig, der üblicherweise zur Regelung des Schwingungssystems in Coriolis-Massendurchflussmessgeräten vorgesehen ist.

Weiterhin ist die Erkennung von Ablagerungen weitgehend unabhängig von dem Mediendruck, dem Massendurchfluss oder der Temperatur durchführbar. Vorteilhaft ist zudem die Robustheit der Diagnose gegenüber Medien mit höherer Viskosität.

Da sich Ablagerungen vergleichsweise langsam bilden, genügt eine zyklische Durchführung des Detektionsverfahrens in vorbestimmten Zeitabständen.

Die Vorgehensweise bei der Erkennung von Ablagerungen kann als ein zweistufiges Verfahren angesehen werden. In der ersten Stufe wird auf der Basis der Dämpfung der Schwingungen eine erste Indikatorgröße verwendet. Wenn die Dämpfung zu hoch ist, wird auf einen Fehler geschlossen. In diesem Fall kommt die zweite Stufe zum Einsatz, um die Art des Fehlers zu bestimmen. Erst in der zweiten Stufe wird auf der Basis der Ausprägung von Oberschwingungen, die mit Hilfe einer Frequenzanalyse untersucht wird, eine zweite Indikatorgröße ausgewertet. Ist zumindest eine Oberschwingung gegenüber dem Grundrauschen stark ausgeprägt, so liegen Ablagerungen vor, ansonsten eventuell anders geartete Störungen. Ein Vorteil dieses zweistufigen Verfahrensablaufs ist die Ersparnis von Rechenleistung. Im Normalfall, das heißt im fehlerfreien Fall, muss nämlich nur die erste Indikationsgröße ermittelt werden. Dies kann beispielsweise durch einfache Effektivwertberechnungen und Berechnen der Quotienten aus den ermittelten Effektivwerten erfolgen. Erst wenn aufgrund einer erhöhten Dämpfung ein Fehler erkannt wurde, muss zusätzlich eine Frequenzanalyse vorgenommen werden, um die Fehlerart zu bestimmen.

Ein Wert der ersten Indikatorgröße, die auf der Dämpfung der Schwingungen des Messrohrs beruht, kann prinzipiell auf vielfältige Weise ermittelt werden. Beispielsweise ist es möglich, das Messrohr durch einen Impuls zu Schwingungen anzuregen und das Abklingen der Schwingungen auszuwerten. Dazu wäre jedoch eine Einrichtung zur Impulsanregung erforderlich, die in üblichen Coriolis-Massendurchflussmessgeräten nicht vorhanden ist.

Für die Anregung des Schwingungssystems muss bereits im normalen Messbetrieb bei erhöhter Dämpfung eine größere Antriebsleistung aufgebracht werden. In vorteilhafter Weise kann daher zur Bestimmung der ersten Indikatorgröße die zur Schwingungsanregung des Messrohrs erforderliche Antriebsleistung ausgewertet werden. Die Antriebsleistung ist eine vergleichsweise einfach zu bestimmende physikalische Größe, da beispielsweise bei Verwendung einer magnetischen Antriebseinrichtung die eingeprägte Stromstärke als bekannte Größe vorliegt und zur Bestimmung der Antriebsleistung lediglich einfache Rechenschritte durchgeführt werden müssen. Die Antriebsleistung kann beispielsweise durch den RMS (Root Mean Square)-Wert wiedergegeben werden, der häufig auch als quadratisches Mittel oder Effektivwert bezeichnet wird. Selbstverständlich kann alternativ dazu ein anderes Maß für die Größe des Antriebssignals eingesetzt werden.

Da die Antriebsleistung üblicherweise durch einen Regelkreis geregelt wird, kann alternativ zur Antriebsleistung die so genannte "Driver Gain" aus dem Regelkreis zur Bestimmung der ersten Indikatorgröße ausgewertet werden.

Da sich eine erhöhte Dämpfung bei gleicher Antriebsleistung durch eine Verringerung der Schwingungsamplitude äußert, ist es in vorteilhafter Weise möglich, zur Bestimmung der ersten Indikatorgröße den quadratischen Mittelwert des ersten oder des zweiten Schwingungssignals oder eines durch Verknüpfen dieser Signale gebildeten Signals auszuwerten. Diese Signale werden im Coriolis-Massendurchflussmessgerät ohnehin erfasst und es ist dazu keinerlei zusätzliche Sensorik erforderlich.

Wertet man zur Bestimmung der ersten Indikatorgröße den Quotienten aus dem quadratischen Mittelwert eines Schwingungssignals und der Antriebsleistung aus, so hat dies den Vorteil, dass dieser weitgehend unabhängig vom Durchfluss ist und umso kleiner wird, je größer die Dämpfung des Schwingungssystems aufgrund von Ablagerungen ist. Durch einen einfachen Vergleich mit einem vorbestimmten Schwellwert können Fehlerfälle von dem fehlerfreien Fall unterschieden werden.

In dem Fall, dass aufgrund der ersten Indikatorgröße ein Fehler festgestellt wurde, wird zur genaueren Bestimmung der Fehlerursache, nämlich zur Detektion von Ablagerungen, die Ausprägung von Oberschwingungen im Frequenzspektrum ausgewertet. In vorteilhafter Weise kann zur Bestimmung der zweiten Indikatorgröße, die auf diesen Ausprägungen beruht, die relative Höhe der Frequenzanteile des Grundrauschens gegenüber der Höhe zumindest einer Oberschwingung ausgewertet werden. Die Ausprägung der Oberschwingung kann dabei in besonders einfacher Weise beurteilt werden, indem die in einem Auswertefenster ermittelten Frequenzanteile auf den Wert des Frequenzanteils der Oberschwingung normiert werden und anschließend die Anzahl der Frequenzanteile im Auswertefenster ermittelt wird, deren normierter Wert unter einem vorgebbaren Schwellwert liegt. Eine derartige Vorgehensweise zeichnet sich durch einen besonders geringen Rechenaufwand aus. Zur Bestimmung der zweiten Indikatorgröße genügt dann bereits die Berechnung von etwa 10 bis 100 Stützwerten als Frequenzanteile zwischen zwei benachbarten Oberschwingungen. Diese Vorgehensweise kann für mehrere Oberschwingungen, deren Anzahl 10 vorzugsweise nicht überschreitet, angewandt werden. Das Spektrum kann also einer gleitenden, abschnittsweisen Normierung unterzogen werden. Das so erhaltene normierte Spektrum wird anschließend ausgewertet, zum Beispiel indem die Anzahl der Frequenzanteile gezählt wird, die unter der vorbestimmten Schwelle liegen. Ist die Anzahl größer als ein weiterer vorbestimmter Schwellwert, so kann darauf geschlossen werden, dass die erhöhte Dämpfung durch Ablagerungen im Messrohr verursacht wird. Ist die Anzahl dagegen gering, liegt eine andere Fehlerursache, beispielsweise eine Mehrphasenströmung, vor.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: eine Prinzipdarstellung eines Coriolis-Massendurchflussmessgeräts und
- Figur 2: ein Ablaufdiagramm des Verfahrens.

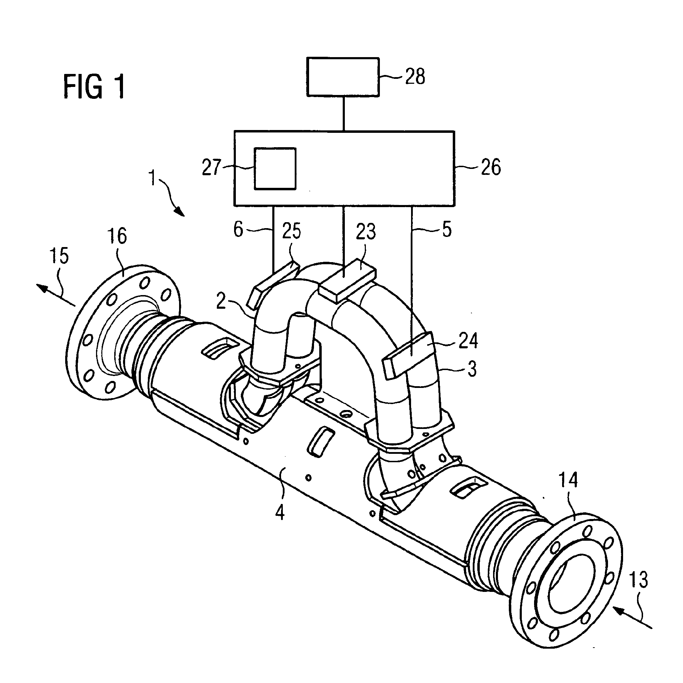

Ein Coriolis-Massendurchflussmessgerät 1 gemäß Figur 1 arbeitet nach dem Coriolisprinzip. Ein erstes Messrohr 2 und ein zweites Messrohr 3 sind im Wesentlichen parallel zueinander angeordnet. Sie werden üblicherweise aus einem Stück durch Biegen angefertigt. Der Verlauf der Messrohre ist im Wesentlichen U-förmig. Ein fließfähiges Medium strömt entsprechend einem Pfeil 13 in das Massendurchflussmessgerät 1 und damit in die beiden hinter einem in der Figur nicht sichtbaren Einlaufsplitter befindlichen Einlaufabschnitte der Messrohre 2 und 3 ein und entsprechend einem Pfeil 15 aus den Auslaufabschnitten und dem dahinter befindlichen, ebenfalls in der Figur nicht sichtbaren Auslaufsplitter wieder aus. Flansche 14 und 16, die mit dem Einlaufsplitter bzw. dem Auslaufsplitter fest verbunden sind, dienen zur Befestigung des Massendurchflussmessgeräts 1 in einer in der Figur nicht dargestellten Rohrleitung. Durch einen Versteifungsrahmen 4 wird die Geometrie der Messrohre 2 und 3 weitgehend konstant gehalten, so dass auch Veränderungen des Rohrleitungssystems, in welchem das Massendurchflussmessgerät 1 eingebaut ist, beispielsweise aufgrund von Temperaturschwankungen, allenfalls zu einer geringen Nullpunktverschiebung führen. Eine in Figur 1 symbolisch dargestellte Erregeranordnung 23, die beispielsweise aus einer am Messrohr 2 befestigten Magnetspule und einem am Messrohr 3 angebrachten Magneten, der in die Magnetspule eintaucht, bestehen kann, dient zur Erzeugung einander entgegengesetzter Schwingungen der beiden Messrohre 2 und 3, deren Grundfrequenz der Eigenfrequenz der im Wesentlichen U-förmigen Mittenabschnitte der Messrohre 2 und 3 entspricht. Ein Aufnehmer 24 sowie ein Aufnehmer 25, deren Aufbau demjenigen der Erregeranordnung 23 entsprechen kann, dienen zur Erfassung der Coriolis-Kräfte und/oder der auf den Coriolis-Kräften beruhenden Schwingungen der Messrohre 2 und 3, die aufgrund der Masse des durchströmenden Mediums entstehen. Die Phasenverschiebung zwischen den Schwingungssignalen 5 und 6, die durch die beiden Aufnehmer 24 bzw. 25 erzeugt werden, wertet eine Auswerteeinrichtung 26 zur Berechnung eines Messwerts für den Durchfluss aus. Die Auswerteeinrichtung 26 dient gleichzeitig zur Ansteuerung der Erregeranordnung 23.

Abweichend von dem gezeigten Ausführungsbeispiel können die Messrohre 2 und 3 selbstverständlich andere Geometrien aufweisen, beispielsweise einen V-förmig oder Ω-förmig ausgebildeten Mittenabschnitt, oder es kann eine abweichende Anzahl und Anordnung von Erregeranordnungen und Aufnehmern gewählt werden. Das Coriolis-Massendurchflussmessgerät kann alternativ eine andere Anzahl von Messrohren, beispielsweise ein Messrohr oder mehr als zwei Messrohre, besitzen.

Verschiedene Referenz- oder Schwellwerte, die in dem neuen Verfahren zum Betreiben des Coriolis-Massendurchflussmessgeräts 1 zur Detektion von Ablagerungen in den Messrohren 2 und/oder 3 Verwendung finden, werden bei einer Kalibrierung, einer Inbetriebnahme oder zu einem anderen Betriebszeitpunkt zum Beispiel empirisch bestimmt und in einem Speicher 27 hinterlegt. Mit Hilfe dieser Schwellwerte ermittelt die Auswerteeinrichtung 26 während des Betriebs des Coriolis-Massendurchflussmessgeräts 1 eine Diagnoseaussage über das Vorhandensein von Ablagerungen. Der Messwert des Massendurchflusses sowie die Diagnoseaussage werden auf einer Anzeige 28 ausgegeben oder über einen in der Figur 1 nicht dargestellten Feldbus an eine übergeordnete Leitstation übertragen. Wird aufgrund vorhandener Ablagerungen ein Fehlerzustand festgestellt, können durch die Leitstation geeignete Maßnahmen zur weiteren Behandlung, beispielsweise eine Anforderung von Wartungspersonal, eingeleitet werden.

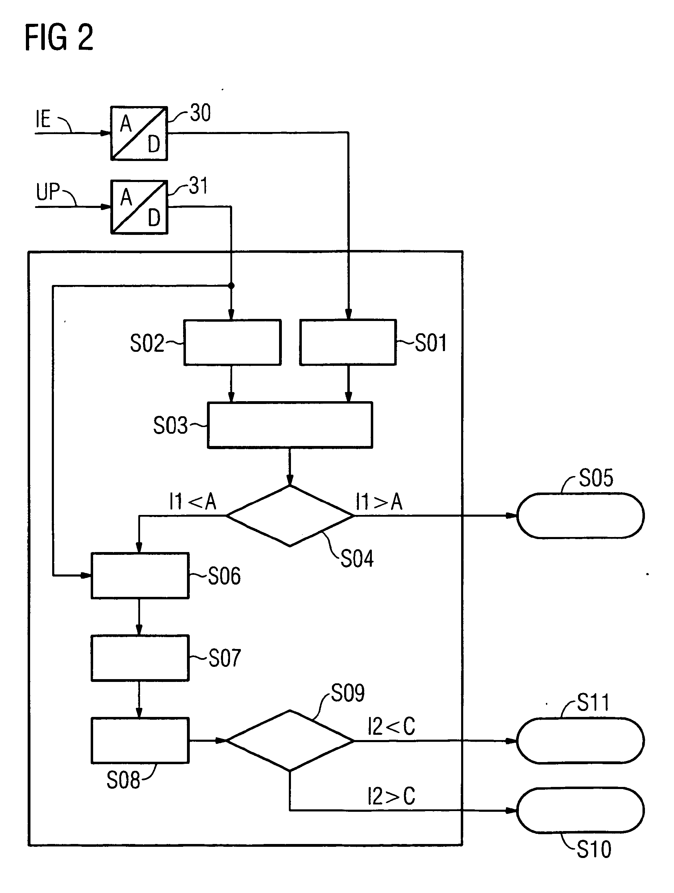

Anhand des in Figur 2 dargestellten Ablaufdiagramms wird im Folgenden das neue Verfahren zum Betreiben eines Coriolis-Massendurchflussmessgeräts, mit welchem nun Ablagerungen im Messrohr detektierbar sind, näher erläutert. Das Verfahren beruht in dem gezeigten Ausführungsbeispiel auf der Auswertung des Erregerstroms IE, der zur Anregung der Messrohre zu Schwingungen auf die Erregeranordnung (Bezugszeichen 23 in Figur 1) gegeben wird, und auf der Auswertung einer Pick-Up-Spannung UP, die als Schwingungssignal (zum Beispiel Bezugszeichen 5 in Figur 1) an einem Aufnehmer (zum Beispiel Bezugszeichen 24 in Figur 1) erfasst wird. Alternativ zur Verwendung lediglich eines Schwingungssignals können selbstverständlich beide Schwingungssignale oder ein durch Verknüpfen dieser Signale gebildetes Signal in die Auswertung einbezogen werden. Da die Auswertung des Erregerstroms IE und der Pick-Up-Spannung UP mit Hilfe eines Mikroprozessors erfolgt, werden die ursprünglich analog vorliegenden Signale zunächst durch Analog-Digital-Umsetzer 30 bzw. 31 in entsprechende Digitalwerte gewandelt. Dies stellt keinen zusätzlichen Aufwand gegenüber herkömmlichen Coriolis-Massendurchflussmessgeräten dar, da diese zur Ermittelung des Massendurchflusses und zur Schwingungsregelung üblicherweise Mikroprozessoren verwenden und daher die Signale in digitaler Darstellung benötigen. In einer ersten Stufe des Verfahrens werden aus dem Erregerstrom IE in einem Schritt S01 die zur Erzeugung der Schwingungen erforderliche Antriebsleistung und aus der Pick-Up-Spannung UP in einem Schritt S02 der quadratische Mittelwert des aufgenommenen Schwingungssignals berechnet. Aus dem quadratischen Mittelwert und der Antriebsleistung wird in einem Schritt S03 der Quotient gebildet, der in einem Schritt S04 mit einem ersten vorbestimmten Schwellwert A verglichen wird.

Der berechnete Quotient stellt eine erste Indikatorgröße I1 dar, die auf der Dämpfung der Schwingungen des Messrohrs beruht. Er ist nämlich unabhängig vom Durchfluss und um so kleiner, je größer die Dämpfung des Schwingungssystems aufgrund von Ablagerungen geworden ist. Liegt der berechnete Quotient oberhalb des Schwellwerts, das heißt, die Abfrage im Schritt S04 ergibt die Aussage I1>A, so wird das Verfahren mit dem Schritt S05 beendet, in welchem die Diagnoseaussage getroffen wird, dass aufgrund der ersten Indikatorgröße I1 keine erhöhte Dämpfung festgestellt wird und somit kein Fehler vorliegt. Andernfalls, das heißt, wenn die Abfrage im Schritt S04 zu dem Ergebnis I1<A führt, wird eine erhöhte Dämpfung festgestellt und die zweite Stufe des Verfahrens eingeleitet, in welcher zur Detektion von Ablagerungen weiterhin eine zweite Indikatorgröße I2 verwendet wird, die auf der Ausprägung von Oberschwingungen im Frequenzspektrum beruht. Die zweite Stufe ist erforderlich, da die Dämpfung auch bei Anwesenheit von anderen Störungen bzw. Prozessbedingungen, zum Beispiel bei einem Mehrphasenfluss oder bei Vorhandensein von Kavitation, steigen kann. Diese Fälle können nun von dem Fall einer Ablagerung unterschieden werden. Bei einer ungleichmäßigen Ablagerung entlang der Rohre werden aufgrund der ungleichmäßigen Massenverteilung deutliche Ausprägungen von Oberschwingungen erkennbar. Diese können somit in einer Betrachtung des Spektrums zur Detektion von Ablagerungen ausgewertet werden. Die zweite Phase des Verfahrens beginnt dazu mit einem Schritt S06, in welchem beispielsweise mit Hilfe einer FFT (Fast-Fourier-Transformation) das Frequenzspektrum der Pick-Up-Spannung UP mit beispielsweise 1024 Stützwerten berechnet wird. Der betrachtete Frequenzbereich wird so gewählt, dass die Resonanz-Frequenz der Grundschwingung des Schwingungssystems und vorzugsweise fünf bis zehn Oberschwingungen enthalten sind. Anhand des berechneten Frequenzspektrums wird zur Beurteilung der Ausprägung von Oberschwingungen in einem Schritt S07 zunächst eine gleitende abschnittsweise Normierung vorgenommen. Die Breite der jeweiligen Abschnitte, über welchen die Normierung erfolgt, wird dabei etwas größer als der im Wesentlichen vorbekannte Abstand benachbarter Oberschwingungen gewählt, so dass die Breite beispielsweise das 1,5-Fache dieses Abstands beträgt. Damit ist sichergestellt, dass in jedem Abschnitt Frequenzanteile zumindest einer Oberschwingung erfasst werden. Unter einer "gleitenden" Normierung wird eine Normierung verstanden, bei welcher zur Berechnung der normierten Frequenzanteile der Abschnitt mit den jeweils zu berücksichtigenden Frequenzanteilen wie bei einer "gleitenden" Mittelwertbildung verschoben wird. Nach der Durchführung der gleitenden abschnittsweisen Normierung haben die Oberschwingungen im Frequenzspektrum maximal die Höhe 1 und das jeweilige Verhältnis zwischen dem Frequenzanteil einer Oberschwingung und den Frequenzanteilen in ihrer unmittelbaren Umgebung bleibt unverändert. In einem darauf folgenden Schritt S08 wird das normierte Spektrum ausgewertet, indem die Anzahl der Stützstellen des Frequenzspektrums ermittelt wird, deren normierte Frequenzanteile unter einer zweiten vorbestimmten Schwelle B liegen, die beispielsweise auf den Wert 0,04 gesetzt ist. Diese Anzahl wird in einem Schritt S09 mit einem dritten vorgegebenen Schwellwert C verglichen und damit als zweite Indikatorgröße I2 verwendet, die auf der Ausprägung von Oberschwingungen im Frequenzspektrum beruht. Ist die ermittelte Anzahl größer als der vorbestimmte dritte Schwellwert C, der beispielsweise auf den Wert 101 gesetzt ist, das heißt, ist das Vergleichsergebnis I2>C, so liegt eine für das Vorhandensein von Ablagerungen charakteristische, zweite Indikatorgröße I2 vor und in einem Schritt S10 wird der Fehlerzustand angezeigt, dass Ablagerungen im Messrohr detektiert wurden. Andernfalls, das heißt bei dem Ergebnis I2<C, wird festgestellt, dass die zweite Indikatorgröße I2 nicht charakteristisch für das Vorliegen von Ablagerungen ist und es wird in einem Schritt S11 angezeigt, dass keine Ablagerungen sondern eine andere Störung der Massendurchflussmessung vorliegt.

Das neue Verfahren zum Betreiben eines Coriolis-Massendurchflussmessgeräts wurde in einer Versuchsreihe erprobt, in welcher neben dem fehlerfreien Zustand Messungen mit Kalk, Wachs und Klebstoff als Ablagerungsmaterialien durchgeführt wurden.

Dabei hat sich gezeigt, dass es gute Ergebnisse bei der Detektion von Ablagerungen liefert, insbesondere wenn diese ungleichmäßig entlang der Rohre verteilt sind und eine detektierbare Mindestgröße erreicht haben. Das neue Coriolis-Massendurchflussmessgerät kann somit für einen Anlagenbetreiber wichtige Informationen über den Zustand seiner prozesstechnischen Anlage und der darin eingesetzten Messgeräte und Rohrleitungen liefern.

## Patentansprüche

1. Verfahren zum Betreiben eines Coriolis-Massendurchflussmessgeräts (1) mit wenigstens einem von einem Medium durchströmten Messrohr (2, 3), das zu Schwingungen angeregt wird, mit wenigstens zwei in Längsrichtung des Messrohrs voneinander beabstandeten Schwingungsaufnehmern (24, 25) zur Erzeugung eines ersten Schwingungssignals (5) bzw. eines zweiten Schwingungssignals (6), wobei zur Detektion von Ablagerungen im Messrohr zunächst,eine erste Indikatorgröße (I1) verwendet wird, die auf der Dämpfung der Schwingungen des Messrohrs beruht, **dadurch gekennzeichnet, dass** falls aufgrund der ersten Indikatorgröße eine erhöhte Dämpfung festgestellt wird, weiterhin eine zweite Indikatorgröße (I2) verwendet wird, die auf der Ausprägung zumindest einer Oberschwingung im Frequenzspektrum eines Schwingungssignals beruht.

2. Verfahren nach Anspruch 1, **dadurch gekennzeichnet, dass** zur Bestimmung der ersten Indikatorgröße (I1) die zur Schwingungsanregung des Messrohrs (2, 3) erforderliche Antriebsleistung ausgewertet wird.

3. Verfahren nach Anspruch 1 oder 2, **dadurch gekennzeichnet, dass** zur Bestimmung der ersten Indikatorgröße (I1) der quadratische Mittelwert des ersten oder des zweiten Schwingungssignals (5, 6) oder eines durch Verknüpfen dieser Signale gebildeten Signals ausgewertet wird.

4. Verfahren nach Anspruch 3 in Verbindung mit Anspruch 2, **dadurch gekennzeichnet, dass** zur Bestimmung der ersten Indikatorgröße (I1) der Quotient aus dem quadratischen Mittelwert und der Antriebsleistung ausgewertet wird.

5. Verfahren nach einem der vorhergehenden Ansprüche, **dadurch gekennzeichnet, dass** zur Bestimmung der zweiten Indikatorgröße (I2) die relative Höhe der Frequenzanteile des Grundrauschens im Frequenzspektrum gegenüber der Höhe der zumindest einen Oberschwingung ausgewertet wird.

6. Verfahren nach Anspruch 5, **dadurch gekennzeichnet, dass** zur Auswertung der relativen Höhe des Grundrauschens die Frequenzanteile in einem Auswertefenster auf den Wert des Frequenzanteils der zumindest einen Oberschwingung normiert werden und dass die Anzahl der Frequenzanteile im Auswertefenster ermittelt wird, deren normierter Wert unter einem vorgebbaren Schwellwert liegt.

7. Coriolis-Massendurchflussmessgerät mit wenigstens einem von einem Medium durchströmten Messrohr (2, 3), das zu Schwingungen angeregt wird, mit wenigstens zwei in Längsrichtung des Messrohrs voneinander beabstandeten Schwingungsaufnehmern (24, 25) zur Erzeugung eines ersten Schwingungssignals (5) bzw. eines zweiten Schwingungssignals (6) und mit einer Auswerteeinrichtung (26), die dazu ausgebildet ist, zur Detektion von Ablagerungen im Messrohr zunächst eine erste Indikatorgröße (I1) auszuwerten, die auf der Dämpfung der Schwingungen des Messohrs beruht, **dadurch gekennzeichnet, dass** die Auswerteeinrichtung weiterhin dazu ausgebildet ist, falls aufgrund der ersten Indikatorgröße eine erhöhte Dämpfung festgestellt wird, eine zweite Indikatorgröße (I2) auszuwerten, die auf der Ausprägung von Oberschwingungen im Frequenzspektrum eines Schwingungssignals beruht.

## Claims

1. Method for operating a Coriolis mass flow meter (1) with at least one measuring tube (2, 3), which is flowed through by a medium and is induced to vibrate, with at least two vibration pickups (24, 25), spaced apart from one another in the longitudinal direction of the measuring tube, for generating a first vibration signal (5) and a second vibration signal (6), respectively, wherein, for the detection of deposits in the measuring tube, a first indicator variable (I1), which is based on the damping of the vibrations of the measuring tube, is initially used, **characterized in that**, if an increased damping is established on the basis of the first indicator variable, a second indicator variable (I2), which is based on the manifestation of at least one harmonic in the frequency spectrum of a vibration signal, is also used.

2. Method according to Claim 1, **characterized in that** the drive power required for inducing the measuring tube (2, 3) to vibrate is evaluated for determining the first indicator variable (I1).

3. Method according to Claim 1 or 2, **characterized in that** the root mean square value of the first or second vibration signal (5, 6) or of a signal formed by linking these signals is evaluated for determining the first indicator variable (I1).

4. Method according to Claim 3 in conjunction with Claim 2, **characterized in that** the quotient of the root mean square value and the drive power is evaluated for determining the first indicator variable (I1).

5. Method according to one of the preceding claims, **characterized in that** the relative level of the frequency components of the background noise in the frequency spectrum is evaluated in comparison with the level of the at least one harmonic for determining the second indicator variable (I2).

6. Method according to Claim 5, **characterized in that**, for evaluating the relative level of the background noise, the frequency components in an evaluation window are normalized to the value of the frequency component of the at least one harmonic and **in that** the number of frequency components in the evaluation window of which the normalized value lies below a predeterminable threshold value is determined.

7. Coriolis mass flow meter with at least one measuring tube (2, 3), which is flowed through by a medium and is induced to vibrate, with at least two vibration pickups (24, 25), spaced apart from one another in the longitudinal direction of the measuring tube, for generating a first vibration signal (5) and a second vibration signal (6), respectively, and with an evaluation device (26), which is designed such that, for the detection of deposits in the measuring tube, it initially evaluates a first indicator variable (I1), which is based on the damping of the vibrations of the measuring tube, **characterized in that** the evaluation device is also designed such that, if an increased damping is established on the basis of the first indicator variable, it evaluates a second indicator variable (I2), which is based on the manifestation of harmonics in the frequency spectrum of a vibration signal.

## Revendications

1. Procédé pour faire fonctionner un débitmètre ( 1 ) massique coriolis ayant au moins un tube ( 2 , 3 ) de mesure, dans lequel passe un fluide et que l'on excite en oscillation, comprenant au moins deux enregistreurs ( 24, 25 ) d'oscillation, à distance l'un de l'autre dans la direction longitudinale du tube de mesure, pour produire un premier signal ( 5 ) d'oscillation et un deuxième signal ( 6 ) d'oscillation, dans lequel, pour la détection de dépôts dans le tube de mesure, on utilise d'abord une première grandeur ( I1 ) d'indicateur, qui repose sur l'amortissement des oscillations du tube de mesure, **caractérisé en ce que**, si l'on constate sur la base de la première grandeur d'indicateur, une augmentation de l'amortissement, on utilise en outre une deuxième grandeur ( I2 ) d'indicateur, qui repose sur l'application d'au moins un harmonique du spectre de fréquence d'un signal d'oscillation.

2. Procédé suivant la revendication 1, **caractérisé en ce que**, pour la détermination de la première grandeur ( I1 ) d'indicateur, on évalue la puissance d'entraînement nécessaire pour l'excitation en oscillation du tube ( 2, 3 ) de mesure.

3. Procédé suivant la revendication 1 ou 2, **caractérisé en ce que**, pour la détermination de la première grandeur ( I1 ) d'indicateur, on évalue la moyenne quadratique du premier ou deuxième signal ( 5, 6 ) d'oscillation ou d'un signal formé par combinaison de ces signaux.

4. Procédé suivant la revendication 3 en liaison avec la revendication 2, **caractérisé en ce que**, pour la détermination de la première grandeur ( I1 ) d'indicateur, on évalue le quotient de la moyenne quadratique par la puissance d'entraînement.

5. Procédé suivant l'une des revendications précédentes, **caractérisé en ce que**, pour la détermination de la deuxième grandeur ( I2 ) d'indicateur, on évalue le niveau relatif des composantes de fréquence du bruit de fond dans le spectre de fréquence, par rapport au niveau du au moins un harmonique.

6. Procédé suivant la revendication 5, **caractérisé en ce que**, pour évaluer le niveau relatif du bruit de fond, on norme les composantes de fréquence, dans une fenêtre d'évaluation, sur la valeur de la composante de fréquence du au moins un harmonique et **en ce que** l'on détermine le nombre des composantes de fréquence dans la fenêtre d'évaluation, dont la valeur normée est inférieure à une valeur de seuil pouvant être donnée à l'avance.

7. Débitmètre massique coriolis ayant au moins un tube ( 2, 3 ) de mesure, dans lequel passe un fluide et qui est excité en oscillation, comprenant au moins deux enregistreurs ( 24, 25 ) d'oscillation, à distance l'un de l'autre dans la direction longitudinale du tube de mesure, pour produire un premier signal ( 5 ) d'oscillation et un deuxième signal ( 6 ) d'oscillation et comprenant un dispositif ( 26 ) d'évaluation, qui est constitué pour évaluer, pour la détection des dépôts dans le tube de mesure, d'abord une première grandeur ( I1 ) d'indicateur, qui repose sur l'amortissement des oscillations du tube de mesure, **caractérisé en ce que** le dispositif d'évaluation est constitué en outre pour, s'il est constaté, sur la base de la première grandeur d'indicateur, une augmentation de l'amortissement, évaluer une deuxième grandeur ( I2 ) d'indicateur, qui repose sur l'application d'harmoniques du spectre de fréquence d'un signal d'oscillation.
